Europäisches Patentamt

European Patent Office

Office européen des brevets

(11) Numéro de publication : **0 386 682 B1**

(12) **FASCICULE DE BREVET EUROPEEN**

(19)

⑪

(45) Date de publication du fascicule du brevet :
**03.11.93 Bulletin 93/44**

(21) Numéro de dépôt : **90104216.8**

(22) Date de dépôt : **05.03.90**

(51) Int. Cl.⁵ : **H01M 4/50, H01M 10/40**

(54) **Générateur électrochimique rechargeable à anode de lithium.**

(30) Priorité : **09.03.89 FR 8903102**

(43) Date de publication de la demande :
**12.09.90 Bulletin 90/37**

(45) Mention de la délivrance du brevet :
**03.11.93 Bulletin 93/44**

(84) Etats contractants désignés :
**AT BE CH DE DK ES FR GB GR IT LI LU NL SE**

�significationDocuments cités :
**EP-A- 0 265 950**
**EP-A- 0 279 235**
**GB-A- 2 196 785**
**US-A- 4 277 360**
**CHEMICAL ABSTRACTS, vol. 109, no. 16, 17 octobre 1988, page 173, résumé no. 132072d, Columbus, Ohio, US; & JP-A-63 148 550 (SANYO ELECTRIC CO., LTD) 21-06-1988**

(56) Documents cités :
**PROCEEDINGS OF THE SYMPOSIUM ON PRIMARY AND SECONDARY AMBIENT TEMPERATURE LITHIUM BATTERIES, vol. 88-6, 1988, pages 557-564, The Electrochemical Society, Inc., Pennington, NY, US; N. FURUKAWA et al.: "Manganese oxides for lithium secondary battery"**
**CHEMICAL ABSTRACTS, vol. 107, no. 22, 30 novembre 1977, page 230, résumé no. 202118h, Columbus, Ohio, US; & JP-A-62 108 457 (SANYO ELECTRIC CO., LTD) 19-05-1987**
**CHEMICAL ABSTRACTS, vol. 104, no. 26, 30 juin 1986, page 173, résumé no. 227746n, Columbus, Ohio, US; & JP-A-61 16 473 (SANYO ELECTRIC CO., LTD) 24-01-1986**

(73) Titulaire : **SAFT (inscrite au Registre du Commerce sous le numéro 343 588 737)**
**156 avenue de Metz**
**F-93230 Romainville (FR)**

(72) Inventeur : **Lecerf, André**
**34 avenue Le Brix**
**F-35740 Pace (FR)**
Inventeur : **Lubin, Francis**
**266 rue des Fougères**
**F-35043 Rennes Cedex (FR)**
Inventeur : **Broussely, Michel**
**53 avenue de Poitiers**
**F-86240 Liguge (FR)**

(74) Mandataire : **Weinmiller, Jürgen et al**
**Lennéstrasse 9 Postfach 24**
**D-82336 Feldafing (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un générateur électrochimique rechargeable à anode de lithium et électrolyte non aqueux, dont les performances sont améliorées par l'utilisation d'une cathode appropriée.

De nombreux sulfures et oxydes métalliques ont été proposés comme matières actives cathodiques dans des générateurs du type précédent. Parmi les oxydes le bioxyde de manganèse $MnO_2$ a fait l'objet d'un grand nombre d'essais ; il est en effet bon marché, facile à se procurer et non toxique. $MnO_2$ est largement utilisé comme cathode dans des générateurs primaires, mais il est apparu rapidement que les bioxydes utilisés dans ces générateurs ne convenaient pas pour des générateurs rechargeables. La raison essentielle est que la décharge provoque des modifications structurales de l'oxyde qui sont irréversibles.

Il est connu que les oxydes possédant la structure spinelle, par exemple $LiMn_2O_4$, $Li_{1-x} Mn_2O_4$, $\lambda MnO_2$ peuvent servir de matière cathodique active dans des générateurs rechargeables. Toutefois les capacités spécifiques des générateurs ainsi réalisés diminuent rapidement après quelques cycles.

Par ailleurs, les oxydes de manganèse $\alpha MnO_2$ ont déjà été expérimentés comme matière cathodique cyclable. Mais on constate aussi une diminution rapide de la capacité à mesure que le cyclage se poursuit. La raison de cette dégradation est probablement l'élimination des gros ions $K^+$ ou $NH_4^+$ qui stabilisent la structure $\alpha$.

La présente invention a pour but de mettre en oeuvre dans un générateur électrochimique rechargeable à anode de lithium, un nouveau type de matière active cyclable à performances améliorées.

La présente invention a pour objet un générateur électrochimique rechargeable dont l'anode est à base de lithium ou d'alliage de lithium et dont l'électrolyte est constitué par une solution d'un sel de lithium dans un solvant non aqueux, générateur caractérisé par le fait que le matériau cathodique est un bioxyde de manganèse contenant des ions lithium et présentant la structure cristallographique du bioxyde de manganèse $\alpha$ appelée cryptomélane.

De préférence, le rapport atomique Li/Mn est sensiblement compris entre 0,1 et 0,5.

Lorsque l'on étudie le diagramme de diffraction de rayons X du matériau cathodique selon l'invention, on constate que les pics sont caractéristiques d'une structure $\alpha MnO_2$, avec un déplacement de ces pics et des modifications d'intensité par rapport au diagramme connu du bioxyde $\alpha MnO_2$.

L'analyse chimique montre que le matériau selon l'invention contient bien du lithium.

L'électrolyte non aqueux d'un générateur selon l'invention est constitué par un solvant, choisi parmi les éthers linéaires ou cycliques, les esters ou leurs mélanges, et un soluté choisi parmi $LiAsF_6$, $LiCF_3SO_3$, $LiBF_4$, $LiPF_6$, $LiClO_4$ et leurs mélanges.

De préférence l'électrolyte est une solution de $LiAsF_6$ dans un mélange de carbonate de propylène, carbonate d'éthylène.

Selon une variante, l'électrolyte est une solution de $LiAsF_6$ dans un mélange de carbonate de propylène, carbonate d'éthylène et diméthoxyéthane.

La présente invention a également pour objet un procédé de fabrication du matériau cathodique précédent.

Il consiste à chauffer un mélange de bioxyde de manganèse de structure $\alpha$ et d'un composé du lithium, à une température comprise entre 300°C et 400°C, la proportion de lithium étant comprise entre 0,1 et 0,5 mole de lithium par mole de manganèse ; de préférence cette proportion est de 0,5 mole de lithium par mole de manganèse.

La phase de chauffage provoque une réaction chimique entre $\alpha MnO_2$ et le composé du lithium. Après la réaction, le produit est lavé à l'eau pour éliminer l'excès éventuel du composé du lithium qui n'aurait pas réagi.

La durée du chauffage est telle qu'il n'apparaisse pas d'autre solide que le bioxyde $\alpha MnO_2$ en cours de réaction, en particulier $LiMn_2O_4$ ou $Li_2MnO_3$. Cette durée peut être de l'ordre de douze heures. La présence des solides précités peut être constatée facilement sur un diagramme de diffraction de rayons X.

Le composé du lithium peut être choisi parmi LiOH, $Li_2O$, $Li_2CO_3$, LiI, LiBr.

Le bioxyde de manganèse $\alpha$ introduit dans ledit mélange peut être obtenu par réaction du sulfate de manganèse $MnSO_4$ avec le persulfate d'ammonium. Il peut également être obtenu par réaction du sulfate de manganèse $MnSO_4$ avec le permanganate de potassium.

D'autres caractéristiques et avantages de la présente invention apparaîtront au cours de la description suivante de modes de réalisation donnés à titre illustratif mais nullement limitatif. Dans le dessin annexe :

- La figure 1 montre très schématiquement en vue semi-coupée un exemple de générateur électrochimique rechargeable de type bouton.
- La figure 2 montre la structure cristallographique du bioxyde de manganèse $\alpha$ connu, appelée cryptomélane.
- La figure 3A montre le diagramme de diffraction de rayons X du bioxyde de manganèse $\alpha$ de la figure

2.

- La figure 3B montre le diagramme de diffraction de rayons X d'un exemple de matériau cathodique selon l'invention.

- La figure 4 montre les courbes de décharge (tension V en fonction du temps t) d'un générateur de l'art antérieur mettant en oeuvre le bioxyde de la figure 2.

- La figure 5 montre des courbes de variations de la capacité spécifique C d'un générateur de l'art antérieur et d'un générateur selon l'invention en fonction du nombre de cycles n.

- La figure 6 montre les courbes de décharge d'un premier exemple de générateur selon l'invention.

- La figure 7 montre le diagramme de diffraction de rayons X d'un autre exemple de matériau cathodique selon l'invention.

- La figure 8 montre les courbes de décharge d'un générateur selon l'invention contenant un matériau cathodique correspondant au diagramme de la figure 7.

- La figure 9 montre le diagramme de diffraction de rayons X d'un autre exemple de matériau cathodique selon l'invention.

- La figure 10 montre les courbes de décharge d'un générateur selon l'invention contenant un matériau cathodique correspondant au diagramme de la figure 9.

- La figure 11 montre le diagramme de diffraction de rayons X d'un bioxyde de manganèse $\alpha$ connu, préparé par une autre méthode que celle ayant permis d'obtenir le bioxyde $\alpha$ $MnO_2$ correspondant au diagramme de la figure 3A.

- La figure 12 montre les courbes de décharge d'un générateur de l'art antérieur contenant un matériau cathodique correspondant au diagramme de la figure 11.

- La figure 13 montre le diagramme de diffraction de rayons X d'un matériau selon l'invention obtenu à partir du bioxyde $\alpha$ $MnO_2$ correspondant au diagramme de la figure 11.

- La figure 14 montre les courbes de décharge d'un générateur selon l'invention contenant un matériau cathodique correspondant au diagramme de la figure 13.

- La figure 15 montre des courbes de variations de la capacité spécifique C des générateurs correspondant aux figures 12 et 14.

Dans tous les diagrammes de diffraction précités on a porté en abscisses les angles de diffraction "a" en degrés.

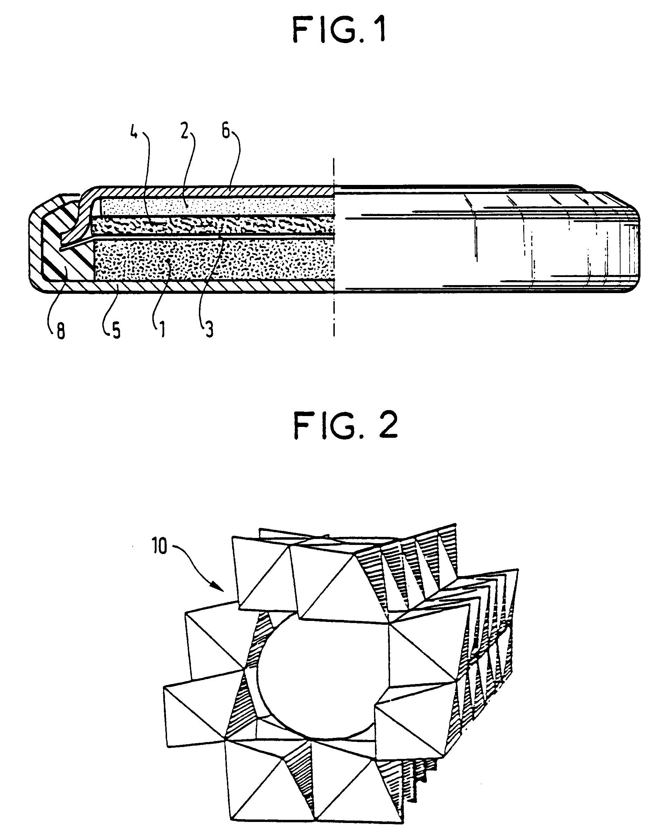

Afin d'expérimenter les propriétés électrochimiques des matériaux selon l'invention vis-à-vis de ceux de l'art antérieur, un accumulateur de type bouton est constitué de la façon suivante (voir figure 1).

Le matériau cathodique est mélangé intimement avec du noir d'acétylène, du graphite, du PTFE dans les proportions pondérales suivantes :

- matériau cathodique 80%
- noir d'acétylène 7,5%
- graphite 7,5% - PTFE 5%.

Une cathode 1 est fabriquée en incrustant une certaine quantité de ce mélange sur une grille d'aluminium. Après séchage et découpe avec un outil approprié, on obtient une électrode ayant la forme d'un disque de 16 mm de diamètre et d'environ 0,5 mm d'épaisseur. L'anode 2 est constituée par un disque de lithium de diamètre 20 mm et de masse 110 mg environ.

Le solvant d'électrolyte est constitué par un mélange de carbonate de propylène, de carbonate d'éthylène et de diméthoxyéthane dans les proportions pondérales respectives de 25%, 25% et 50%. On y dissout un soluté, par exemple l'hexafluoroarséniate de lithium, à la concentration de 1 mole/litre.

Les électrodes 1 et 2 sont séparées par un séparateur de polypropylène microporeux 3 et un séparateur réservoir 4 en fibres de polypropylène sous forme de feutre.

L'ensemble est disposé dans une coupelle 5 fermée de manière étanche par un couvercle 6 par l'intermédiaire d'un joint 8.

La figure 2 montre la structure du bioxyde de manganèse $\alpha$ connu, appelée cryptomélane, conformément à la description donnée par E.H. PERSEIL et R. GIOVANOLI dans SCHWEIZ MINERAL PETROGR. MITT. 68 p. 114. 1988.

## EXEMPLE 1 ART ANTERIEUR

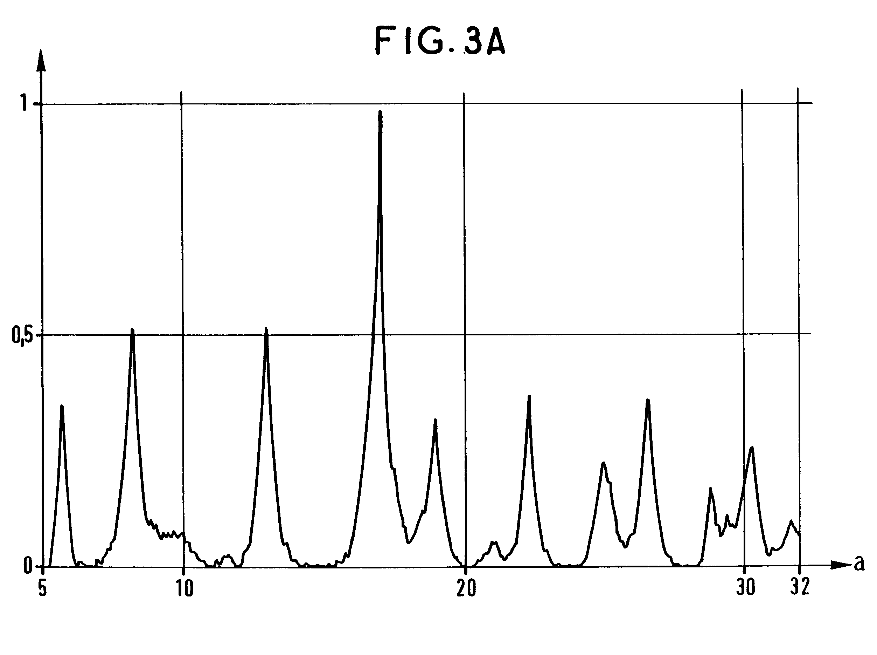

On prépare le bioxyde $\alpha$ $MnO_2$ de l'art antérieur comme cela est décrit dans la littérature, par exemple par K.M. PARIDA, S.B. KANUNGA et B.R. SANT, dans Electrochemica Acta Vol.26 pages 435 à 443. On oxyde une solution de $MnSO_4$ par le persulfate d'ammonium. La figure 3A représente le diagramme de diffraction du bioxyde $\alpha$ $MnO_2$ obtenu.

On prend 57 mg de ce produit et on le place comme matériau cathodique dans l'accumulateur de la figure 1. Cet accumulateur est ensuite soumis à des cycles de décharge/charge, à un courant de 1mA. La charge est effectuée jusqu'à une tension maximum de 4 volts, la décharge jusqu'à une tension minimum de 2 volts.

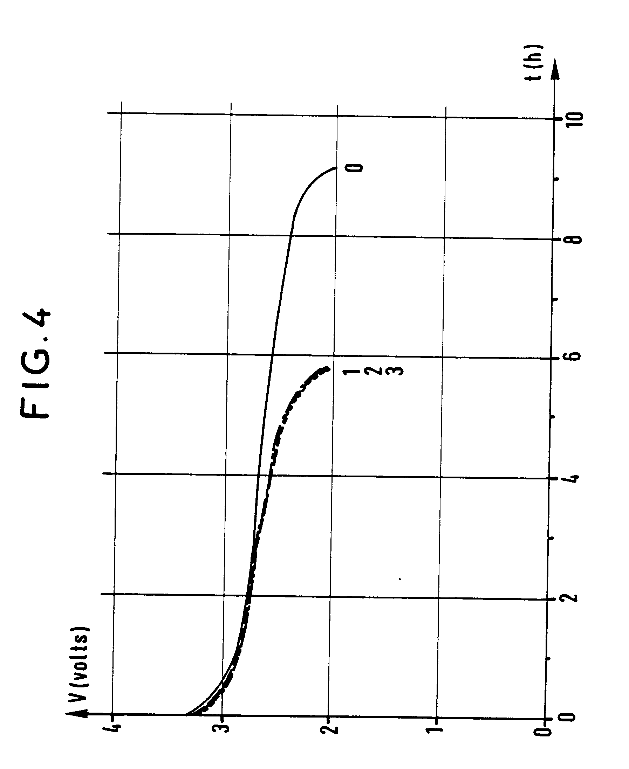

La figure 4 montre les résultats obtenus en décharge, pour plusieurs cycles. La tension V (en volts) a été portée en ordonnées, et le temps t (en heures) en abscisses.

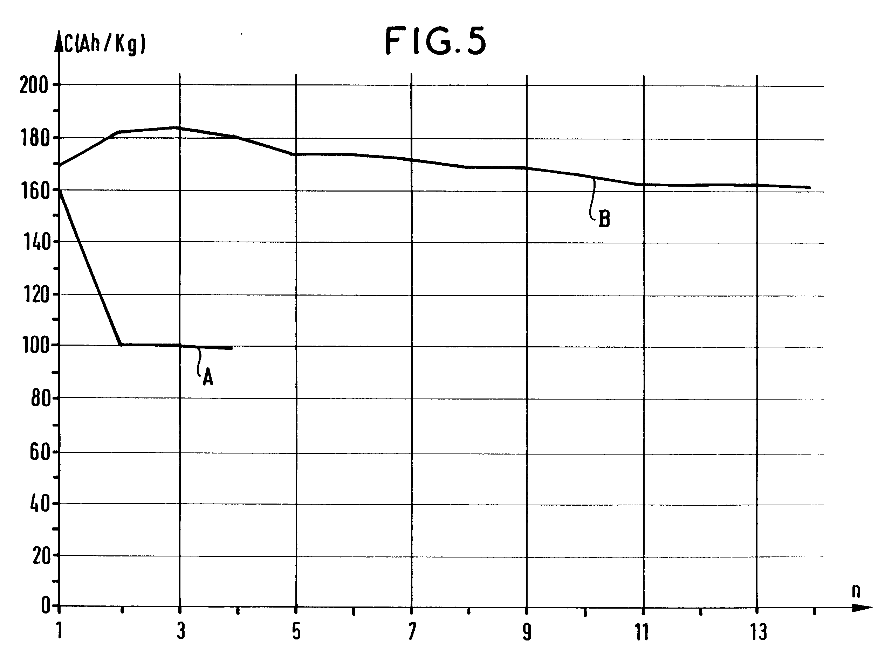

La capacité spécifique (C) de cet accumulateur exprimée en Ah/Kg apparaît dans la courbe A de la figure 5 en fonction du nombre de cycles n. On voit que cette capacité décroît très rapidement lors des premiers cycles. On va donner ci-dessous plusieurs exemples de générateurs selon l'invention.

## EXEMPLE 2

On prépare le même $\alpha$ MnO$_2$ que précédemment correspondant au diagramme de la figure 3A.40g de cet $\alpha$ MnO$_2$ sont intimement mélangés à 8,67g de LiOH, H$_2$O. Le mélange est chauffé de préférence une première fois environ 3 heures à 300°C le solide est de nouveau mélangé puis chauffé environ 12 heures à 300°C. Après réaction le solide est lavé à l'eau et séché.

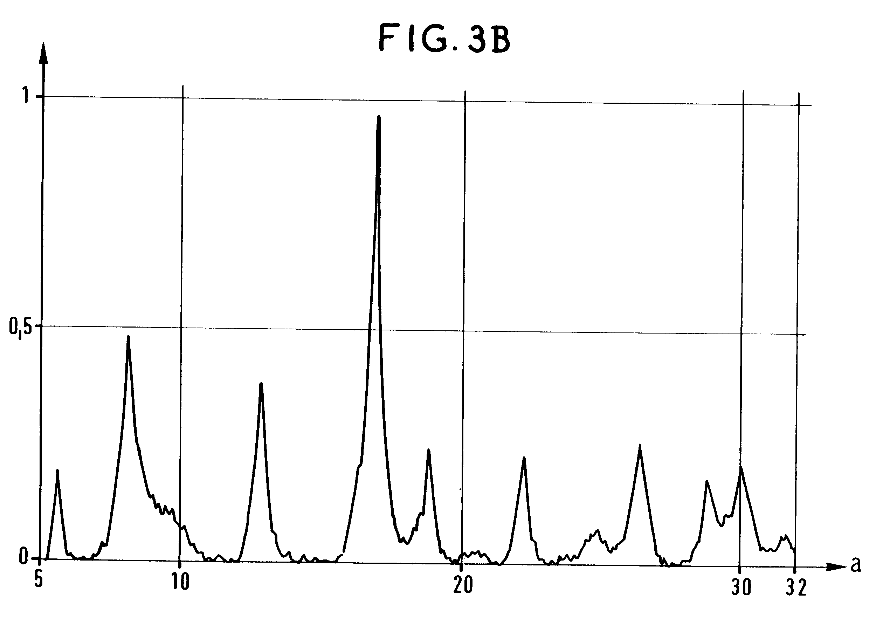

La figure 3B montre le diagramme de diffraction de rayons X du matériau obtenu après réaction et lavage. On constate que les deux diagrammes des figures 3A et 3B correspondent à la structures $\alpha$ MnO$_2$ dite cryptomélane, mais qu'il y a déplacement des pics et modifications des intensités. Ces modifications apparaissent plus clairement sur le dépouillement des diagrammes dans le tableau I ci-dessous. On a noté "d" les distances réticulaires en Å et "I/I°" le rapport des intensités des raies en % par rapport à la raie la plus intense.

### TABLEAU I

| Avant réaction | | Après réaction | |
|---|---|---|---|
| d | I/I° | d | I/I° |
| 7.059 | 36 | 7.299 | 19 |
| 4.975 | 52 | 5.110 | 48 |
| 3.140 | 52 | 3.202 | 39 |
| 2.402 | 100 | 2.429 | 100 |
| 2.161 | 33 | 2.186 | 25 |
| 1.834 | 38 | 1.856 | 28 |
| 1.643 | 24 | - | - |
| 1.544 | 37 | 1.561 | 30 |
| 1.429 | 19 | 1.431 | 19 |
| 1.359 | 27 | 1.376 | 23 |

L'analyse chimique montre que le produit obtenu contient 3,0% de lithium, soit une proportion d'environ 0,5 mole de lithium par mole de manganèse.

- 73 mg du matériau selon l'invention sont introduits dans une électrode à titre de matériau cathodique, dans un accumulateur de type bouton (voir figure 1).

Cet accumulateur est cyclé dans les mêmes conditions que l'accumulateur de l'art antérieur.

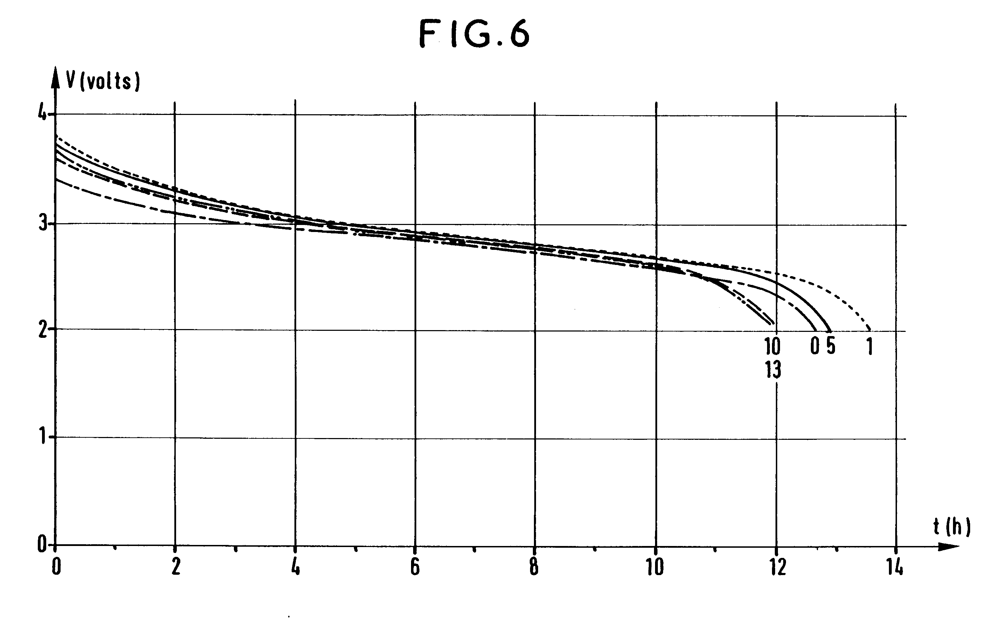

La figure 6 montre les résultats obtenus en décharge pour plusieurs cycles. La courbe B de la figure 5 montre que la capacité spécifique C est élevée, et se stabilise après quelques cycles.

Les courbes A et B montrent clairement l'intérêt du matériau selon l'invention vis-à-vis du $\alpha$ MnO$_2$ de l'art antérieur.

EXEMPLE 3

On fabrique un matériau selon l'invention par la méthode décrite dans l'exemple 2, contenant une proportion de 0,3 mole de lithium par mole de manganèse.

Les proportions des réactifs dans ce cas sont les suivantes :

$\alpha$ MnO$_2$ : 40g

LiOH, H$_2$O : 5,38g

L'analyse montre une proportion de lithium de 0,29 mole de lithium par mole de manganèse.

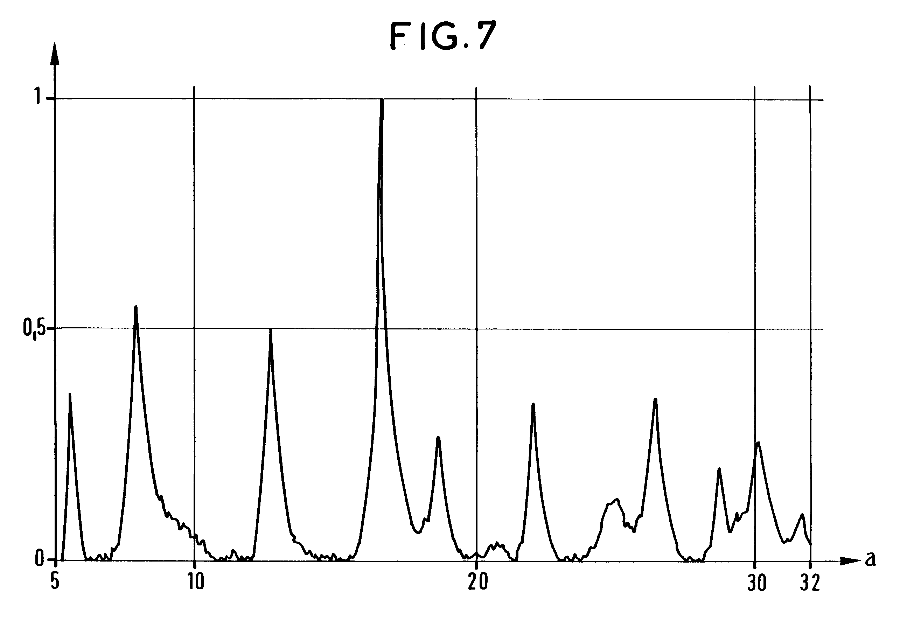

La figure 7 montre le diagramme de rayons X du composé obtenu. Il s'agit toujours de la structure dite cryptomélane.

- 49mg de ce matériau ont été utilisés comme cathode dans un accumulateur de type bouton selon la méthode décrite dans les exemples précédents.

Cet accumulateur a été cyclé sous 1mA, dans les mêmes conditions que précédemment.

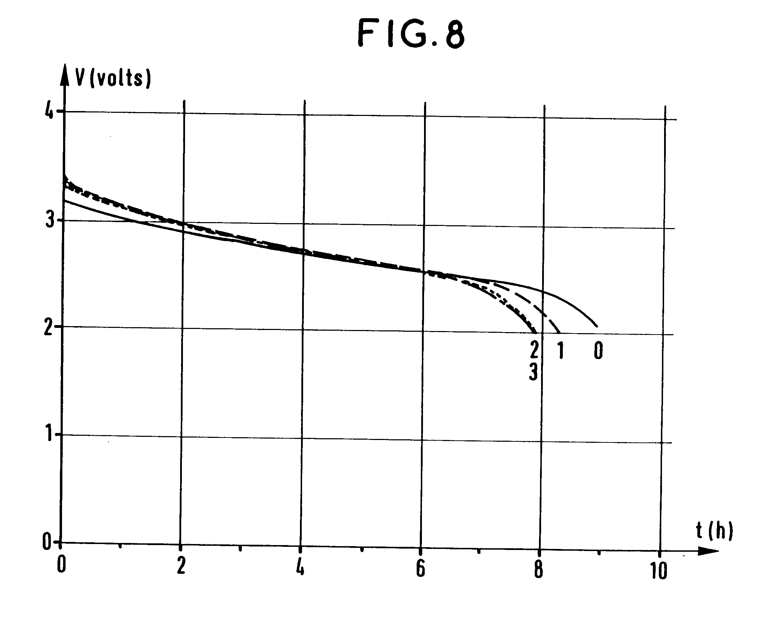

Le résultat obtenu est reporté sur la figure 8 montrant différentes courbes de décharge.

EXEMPLE 4

Il est identique à l'exemple 3, à ceci près que la proportion de lithium dans le matériau est de 0,1 mole de lithium par mole de manganèse. On a pris au départ :

$\alpha$ MnO$_2$ : 40g

LiOH, H$_2$O : 1,79g

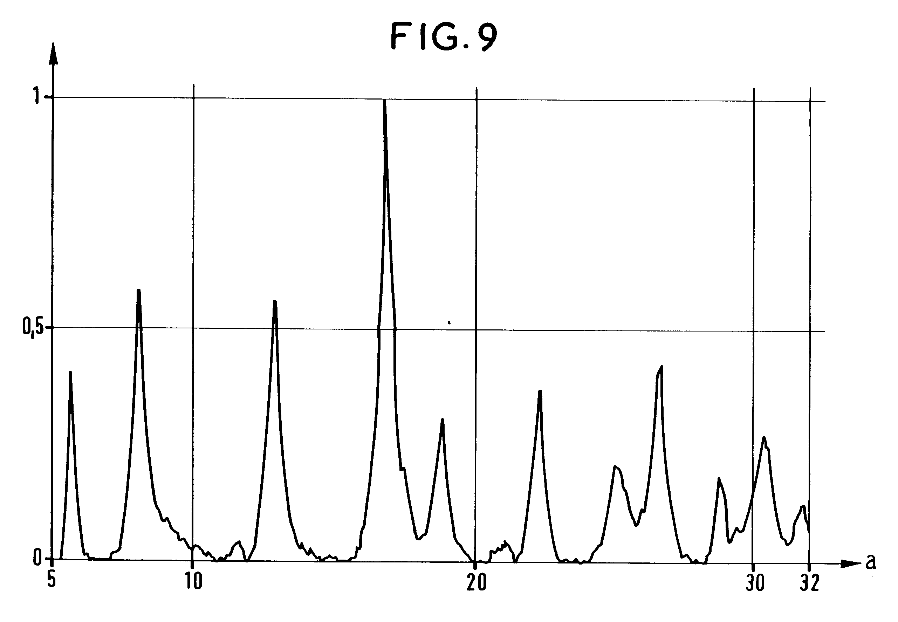

Le diagramme de rayons X du matériau obtenu après mise en oeuvre du procédé selon l'invention apparaît dans la figure 9. Il s'agit toujours de la structure cristallographique du $\alpha$ MnO$_2$ dite cryptomélane. La proportion de lithium obtenue par analyse est de 0,11.

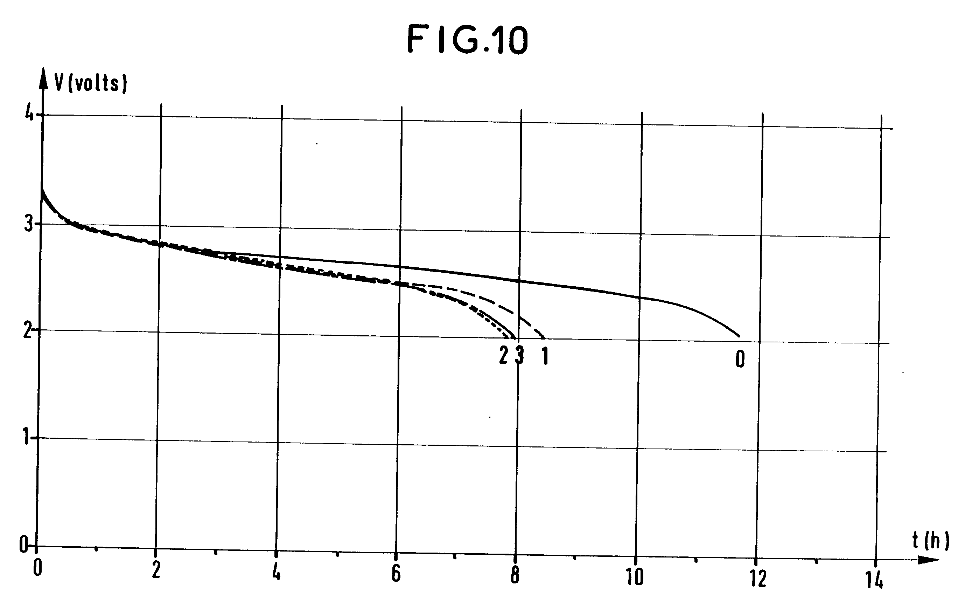

- 58 mg de ce matériau ont été introduits comme matériau cathodique de l'accumulateur de la figure 1. Les courbes de décharges apparaissent dans la figure 10.

EXEMPLE 5

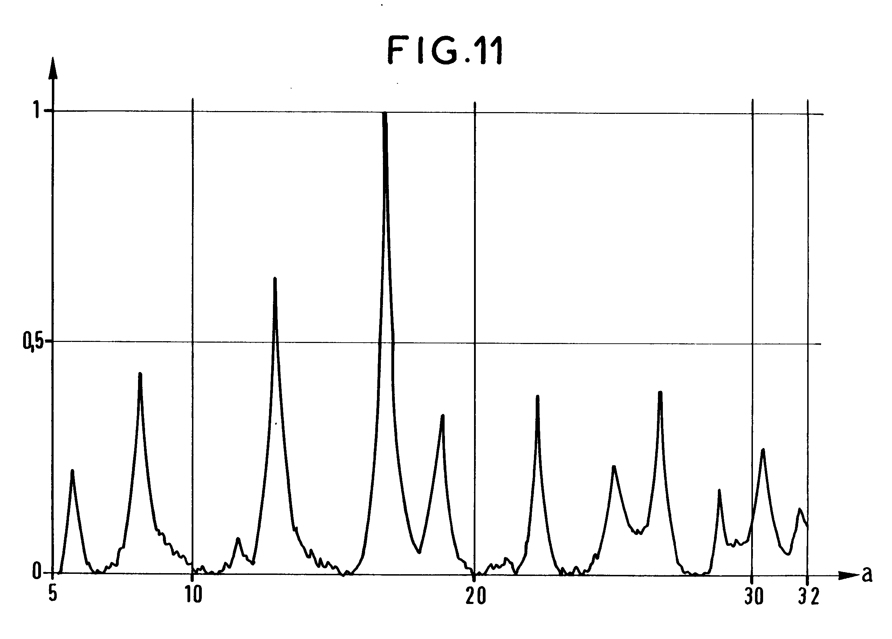

On prépare le bioxyde de départ $\alpha$ MnO$_2$ en oxydant une solution de MnSO$_4$ par le permanganate de potassium KMnO$_4$, selon un procédé classique en milieu aqueux. Le produit obtenu est décrit par le diagramme de rayons X présenté dans la figure 11. Il s'agit bien d'un bioxyde $\alpha$ MnO$_2$ à structure cristallographique dite cryptomélane.

On introduit 61,6 mg de ce matériau comme matériau cathodique pour réaliser un accumulateur, selon une méthode identique aux exemples précédents.

Cet accumulateur est ensuite cyclé à 1mA dans les mêmes conditions que les autres.

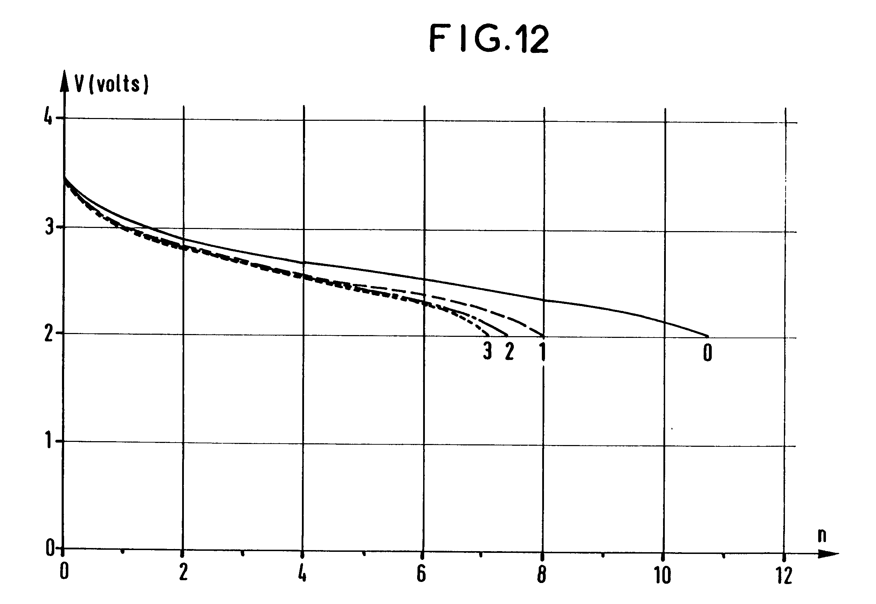

La figure 12 montre les résultats obtenus pour les décharges pendant 4 cycles.

EXEMPLE 6

On part du bioxyde de manganèse $\alpha$ MnO$_2$ de l'exemple 5 et on en mélange intimement 40g à 5,15g de LiOH, H$_2$O. Le mélange est chauffé à 300°C pendant 3 heures. Après réhomogénéisation, le mélange est chauffé une deuxième fois 12 heures à 350°C. Après réaction, le solide est lavé à l'eau et séché.

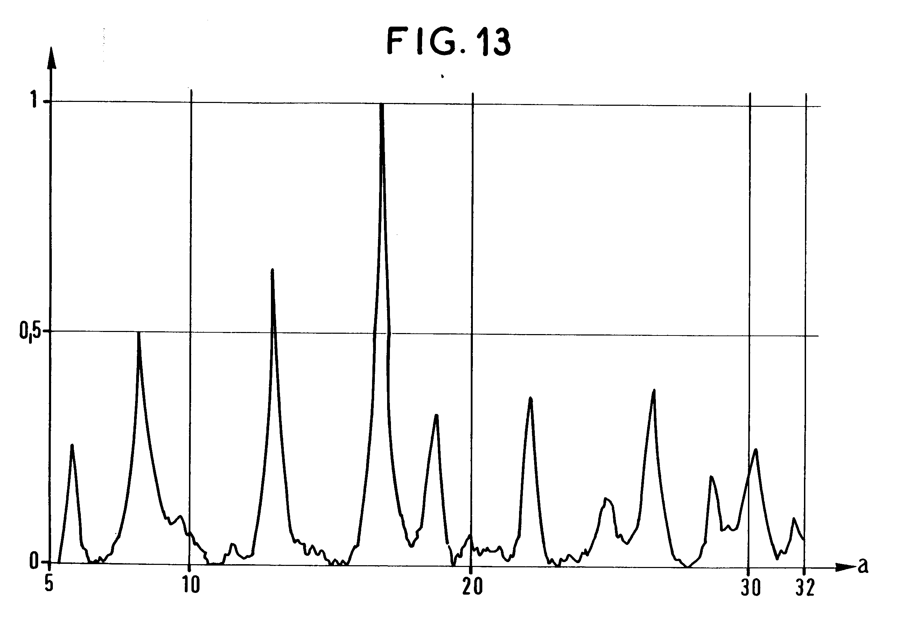

Le diagramme de rayons X du matériau obtenu selon l'invention est présenté dans la figure 13. Ce diagramme montre que la structure du $\alpha$ MnO$_2$ initial est bien conservée.

- 77,6 mg de ce matériau sont utilisés pour la réalisation d'un accumulateur de type bouton selon la méthode décrite dans les exemples précédents. Cet accumulateur est ensuite cyclé à 1mA toujours dans les mêmes conditions que précédemment.

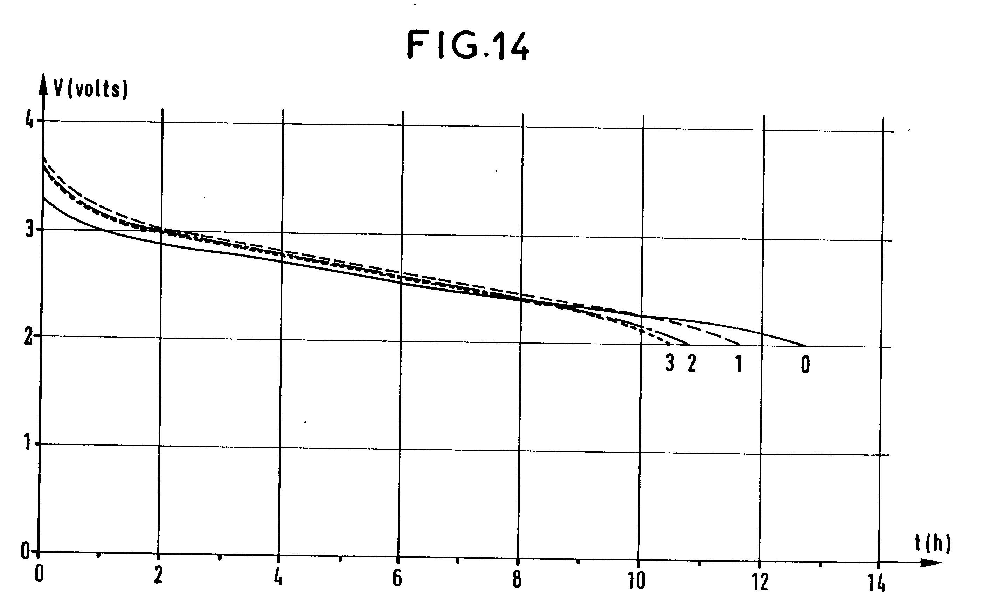

La figure 14 montre les résultats obtenus en décharge pendant plusieurs cycles. Bien que la forme des courbes soit un plus différente de celle obtenue à partir du bioxyde $\alpha$ MnO$_2$ de l'exemple 1, le matériau cathodique ainsi fabriqué peut être utilisé comme cathode réversible.

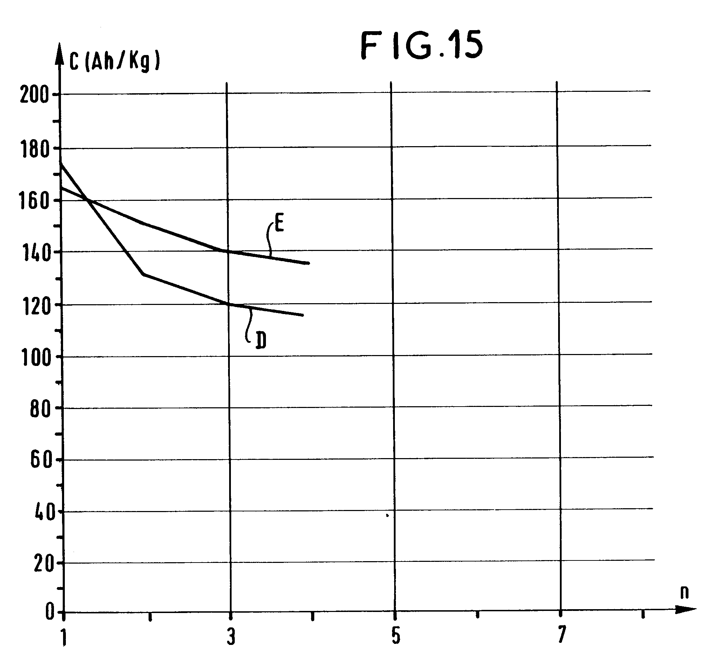

La capacité spécifique C obtenue après 4 cycles apparaît dans la courbe E de la figure 15.

A titre de comparaison on a reporté dans la courbe D les résultats obtenus avec l'accumumateur de l'exemple 5. On voit que pour ce dernier la capacité spécifique chute très rapidement.

Bien entendu l'invention n'est pas limitée aux modes de réalisation qui viennent d'être décrits.

**Revendications**

1. Générateur électrochimique rechargeable dont l'anode est à base de lithium ou d'alliage de lithium et dont l'électrolyte est constitué par une solution d'un sel de lithium dans un solvant non aqueux, générateur caractérisé par le fait que le matériau cathodique est un bioxyde de manganèse contenant des ions lithium et présentant la structure cristallographique du bioxyde de manganèse $\alpha$ appelée cryptomélane.

2. Générateur électrochimique selon la revendication 1, caractérisé par le fait que dans ledit matériau cathodique le rapport atomique Li/Mn est sensiblement compris entre 0,1 et 0,5.

3. Générateur électrochimique selon l'une des revendications 1 et 2, caractérisé par le fait que ledit électrolyte non aqueux est constitué d'un solvant, choisi parmi les éthers linéaires ou cycliques, les esters ou leurs mélanges, et d'un soluté choisi parmi $LiAsF_6$, $LiCF_3SO_3$, $LiBF_4$, $LiPF_6$, $LiClO_4$ et leurs mélanges.

4. Générateur électrochimique selon la revendication 3, caractérisé par le fait que l'électrolyte est une solution de $LiAsF_6$ dans un mélange de carbonate de propylène et de carbonate d'éthylène.

5. Générateur électrochimique selon la revendication 3, caractérisé par le fait que l'électrolyte est une solution de $LiAsF_6$ dans un mélange de carbonate de propylène, de carbonate d'éthylène et de diméthoxyéthane.

6. Procédé de fabrication du matériau cathodique du générateur selon l'une des revendications 1 à 5, caractérisé par le fait que l'on chauffe un mélange de bioxyde de manganèse de structure $\alpha$ et d'un composé du lithium, à une température comprise entre 300°C et 400°C, pendant une durée telle que le matériau obtenu garde la structure cristallographique du bioxyde de manganèse $\alpha$ appelée cryptomélane.

7. Procédé de fabrication selon la revendication 6, caractérisé par le fait que la proportion de lithium est comprise entre 0,1 et 0,5 mole de lithium par mole de manganèse.

8. Procédé de fabrication selon l'une des revendications 6 et 7, caractérisé par le fait que ledit composé du lithium est choisi parmi LiOH, $Li_2O$, $Li_2CO_3$, LiI, LiBr.

9. Procédé de fabrication selon l'une des revendications 6 à 8, caractérisé par le fait que ledit bioxyde de manganèse de structure $\alpha$ introduit dans ledit mélange est obtenu par réaction du sulfate de manganèse $MnSO_4$ avec le persulfate d'ammonium.

10. Procédé de fabrication selon l'une des revendications 6 à 8, caractérisé par le fait que ledit bioxyde de manganèse de structure $\alpha$ introduit dans ledit mélange est obtenu par réaction du sulfate de manganèse $MnSO_4$ avec le permanganate de potassium.

**Patentansprüche**

1. Wiederaufladbarer elektrochemischer Generator, dessen Anode Lithium oder eine Lithiumlegierung enthält und dessen Elektrolyt aus einer Lösung eines Lithiumsalzes in einem nicht-wässrigen Lösungsmittel besteht, dadurch gekennzeichnet, daß das kathodische Material ein Mangandioxid ist, das Lithiumionen enthält und die kristallographische Struktur des $\alpha$-Mangandioxids aufweist, das Cryptomelan genannt wird.

2. Elektrochemischer Generator nach Anspruch 1, dadurch gekennzeichnet, daß im Kathodenmaterial das Atomverhältnis Li/Mn im wesentlichen zwischen 0,1 und 0,5 liegt.

3. Elektrochemischer Generator nach einem der Ansprüche 1 und 2, dadurch gekennzeichnet, daß der nicht-wässrige Elektrolyt aus einem Lösungsmittel, das aus den linearen oder zyklischen Äthern, den Estern oder ihren Mischungen ausgewählt wird, und einem gelösten Stoff besteht, der aus $LiAsF_6$, $LiCF_3SO_3$, $LiBF_4$, $LiPF_6$, $LiClO_4$ und ihren Mischungen ausgewählt wird.

4. Elektrochemischer Generator nach Anspruch 3, dadurch gekennzeichnet, daß der Elektrolyt eine Lösung von $LiAsF_6$ in einer Mischung aus Propylenkarbonat und Äthylenkarbonat ist.

**5.** Elektrochemischer Generator nach Anspruch 3, dadurch gekennzeichnet, daß der Elektrolyt eine Lösung von $LiAsF_6$ in einer Mischung aus Propylenkarbonat, Äthylenkarbonat und Dimethoxyäthan ist.

**6.** Verfahren zur Herstellung des Kathodenmaterials des Generators gemäß einem der Ansprüche 1 bis 5, dadurch gekennzeichnet, daß man eine Mischung von Mangandioxid der Struktur $\alpha$ und einer Lithium-verbindung auf eine Temperatur zwischen 300°C und 400°C während einer solchen Zeitdauer erhitzt, daß das erhaltene Material die kristallographische Struktur des $\alpha$-Mangandioxids, Cryptomelan genannt, bei-behält.

**7.** Herstellungsverfahren nach Anspruch 6, dadurch gekennzeichnet, daß der Lithiumanteil zwischen 0,1 und 0,5 Mol Lithium je Mol Mangan liegt.

**8.** Herstellungsverfahren nach einem der Ansprüche 6 und 7, dadurch gekennzeichnet, daß die Lithiumverbindung ausgewählt wird aus LiOH, $Li_2O$, $Li_2CO_3$, LiI, LiBr.

**9.** Herstellungsverfahren nach einem der Ansprüche 6 bis 8, dadurch gekennzeichnet, daß das in die Mischung eingeführte Mangandioxid der Struktur $\alpha$ durch Reaktion des Mangansulfats $MnSO_4$ mit Ammoniumpersulfat erhalten wird.

**10.** Herstellungsverfahren nach einem der Ansprüche 6 bis 8, dadurch gekennzeichnet, daß das in die Mischung eingeführte Mangandioxid der Struktur $\alpha$ durch Reaktion des Mangansulfats $MnSO_4$ mit Kalium-permanganat erhalten wird.

## Claims

**1.** A rechargeable electrochemical battery wherein the anode is made of lithium or of a lithium alloy and wherein the electrolyte is composed of a solution of a lithium salt in a non-aqueous solvent, characterized in that the cathode material of said battery is a manganese dioxide containing lithium ions and displaying the crystallographic structure of $\alpha$ manganese dioxide known as cryptomelane.

**2.** An electrochemical battery according to claim 1, characterized in that in said cathode material, the atomic ratio Li/Mn substantially ranges from 0.1 to 0.5.

**3.** An electrochemical battery according to claim 1 or claim 2, characterized in that said non-aqueous electrolyte is composed of a solvent selected from the group consisting of linear or cyclic ethers, esters or mixtures thereof and a solute selected from the group consisting of $LiAsF_6$, $LiCF_3SO_3$, $LiBF_4$, $LiPF_6$, $LiClO_4$ and mixtures thereof.

**4.** An electrochemical battery according to claim 3, characterized in that the electrolyte is a solution of $LiAsF_6$ in a mixture of propylene carbonate and ethylene carbonate.

**5.** An electrochemical battery according to claim 3, characterized in that the electrolyte is a solution of $LiAsF_6$ in a mixture of propylene carbonate, ethylene carbonate and dimethoxyethane.

**6.** A process of making the cathode material of the battery according to any one of claims 1 to 5, characterized in that a mixture containing manganese dioxide displaying an $\alpha$ structure and a lithium compound is heated at a temperature ranging from 300°C to 400°C, for a time such that the material produced retains the crystallographic structure of a manganese dioxide known as cryptomelane.

**7.** A process according to claim 6, characterized in that the proportion of lithium ranges from 0.1 to 0.5 mole of lithium per mole of manganese.

**8.** A process according to any one of claims 6 or 7, characterized in that said lithium compound is selected from the group consisting of LiOH, $Li_2O$, $Li_2CO_3$, LiI, LiBr.

**9.** A process according to any one of claims 6 to 8, characterized in that said manganese dioxide displaying an $\alpha$ structure and introduced in said mixture is produced by the reaction of manganese sulphate $MnSO_4$ with ammonium persulphate.

**10.** A process according to any one of claims 6 to 8, characterized in that said manganese dioxide displaying an $\alpha$ structure and introduced in said mixture is produced by the reaction of manganese sulphate $MnSO_4$ with potassium permanganate.

# FIG. 1

# FIG. 2

FIG.3A

# FIG. 3B

# FIG.4

FIG.5

# FIG.6

EP 0 386 682 B1

FIG.7

EP 0 386 682 B1

FIG. 8

FIG. 9

# FIG.10

EP 0 386 682 B1

EP 0 386 682 B1

# FIG.11

FIG.12

# FIG. 13

# FIG.14

FIG.15